(19) **Europäisches Patentamt / European Patent Office / Office européen des brevets**

(11) **EP 3 726 428 B1**

(12) **EUROPEAN PATENT SPECIFICATION**

(45) Date of publication and mention
of the grant of the patent:
**01.10.2025 Bulletin 2025/40**

(21) Application number: **18888791.3**

(22) Date of filing: **12.12.2018**

(51) International Patent Classification (IPC):
**G06F 18/25** *(2023.01)* **G01D 3/036** *(2006.01)*
**G01D 3/08** *(2006.01)*

(52) Cooperative Patent Classification (CPC):
**G01D 3/08; G01D 3/036; G06F 18/25**

(86) International application number:
**PCT/CN2018/120627**

(87) International publication number:
**WO 2019/114757 (20.06.2019 Gazette 2019/25)**

(54) **OPTIMIZATION METHOD AND APPARATUS FOR MULTI-SENSOR TARGET INFORMATION FUSION, COMPUTER DEVICE, AND RECORDING MEDIUM**

OPTIMIERUNGSVERFAHREN UND -VORRICHTUNG ZUR FUSION VON MULTISENSORZIELINFORMATIONEN, COMPUTERVORRICHTUNG UND AUFZEICHNUNGSMEDIUM

PROCÉDÉ ET APPAREIL D'OPTIMISATION POUR LA FUSION D'INFORMATIONS CIBLES DE CAPTEURS MULTIPLES, DISPOSITIF INFORMATIQUE ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2017 CN 201711346317**

(43) Date of publication of application:
**21.10.2020 Bulletin 2020/43**

(73) Proprietor: **NIO (Anhui) Holding Co., Ltd.
Hefei City, Anhui Province (CN)**

(72) Inventor: **PENG, Siwei
Anting, Jiading, Shanghai (CN)**

(74) Representative: **Vossius & Partner
Patentanwälte Rechtsanwälte mbB
Siebertstrasse 3
81675 München (DE)**

(56) References cited:
**CN-A- 105 352 535 CN-A- 106 101 640
CN-A- 108 573 271 US-A1- 2017 032 196**

- **BLANC C ET AL: "Track to track fusion method applied to road obstacle detection", PROCEEDINGS OF IEEE INTERNATIONAL CONFERENCE ON INFORMATION FUSION, 1 June 2004 (2004-06-01), pages 1 - 8, XP055827351, Retrieved from the Internet <URL:https://citeseerx.ist.psu.edu/viewdoc/download?doi=10.1.1.3506&rep=rep1&type=pdf> [retrieved on 20210723]**
- **GAO J.B. ET AL: "Some remarks on Kalman filters for the multisensor fusion", INFORMATION FUSION, vol. 3, no. 3, 1 September 2002 (2002-09-01), US, pages 191 - 201, XP055827418, ISSN: 1566-2535, DOI: 10.1016/S1566-2535(02)00070-2**

## Description

## Technical Field

The invention relates to the field of automobiles, and more particularly to an optimization method and apparatus for multi-sensor target information fusion, a computer device, and a recording medium.

## Background Art

Currently, in the field of automobiles around the world, "intelligentization" is a clear development direction. The National Highway Traffic Safety Administration (NHTSA) has also given a standard for levels of automobile driving, from auxiliary driving to automated driving, but whether it is the auxiliary driving or the automated driving, it is necessary to fuse results from target sensing sensors, so as to reduce overlapped targets and compensate for deficiencies of the results from different sensors.

However, when it comes to the fusion of sensor results related to a target, this will involve the issue of weight assignment among the results from multiple sensors used for sensing the target. Such fusion requires processing of a large number of sensor results in real time and filtering of these results to provide a decision module with a stably and linearly varying target group, and thus usually involves the consumption of a large amount of processing power, and a conventional embedded processor chip has a relatively low processing performance, which result in the assignment of a fusion weight being artificially determined only according to characteristics of the sensors and the maximum error of the results when such a fusion process is carried out by means of the conventional embedded processor chip. The fusion weight obtained in this way is a weight defined in advance, and therefore, especially in the case of a sensor jump, there are problems that the weight assignment is irrational and is not universally applicable, and then an accurate target fusion estimation result cannot be obtained.

A non-patent literature "Track to track fusion method applied to road obstacle detection" by Blanc C. et al., presents a data fusion Kalman based method applied to obstacle detection in road situations. The principle and the implementation of fusion process is based on tracks produced separately by single sensors. A system combining infrared imagery with Radar is provided to perform obstacle avoidance. Results show the quality of their collaboration through the fusion module, improving interpretation of the situation and reducing false alarm rate.

Another non-patent literature "Some remarks on Kalman filters for the multisensory fusion" by Gao J.B. et al., discusses various Kalman-filter-based multisensory data fusion algorithms and introduces two fusion algorithms of state-based fusion. Based on the benchmark simulations, the modified track-to track fusion (MTF) can be viewed as a sub-optimal state fusion method, but, compared to the measurement fusion methods and track-to-track fusion algorithm etc. MTF algorithm for dissimilar sensors is more effective both in computational cost and for high levels of process noise.

## Summary of the Invention

It is an object of the invention to provide an optimization method and an optimization apparatus for multi-sensor target information fusion and a recording medium being enhanced with respect to the aforementioned technical drawbacks.

The object is solved by an optimization method, an optimization apparatus and a recording medium according to the independent claims. Advantageous embodiments are subjected to the dependent claims.

According to one aspect of the invention, an optimization method for multi-sensor target information fusion according to claim 1 is provided.

Further, in one aspect of the invention, the method also comprises: step S5: correcting the covariance obtained in step S32 according to the transformation matrix obtained in step S31 and the Kalman gain obtained in step S33, so as to obtain a corrected covariance.

Further, in one aspect of the invention, in step S32, the corresponding covariance of each set of actual measurement results at the current time is obtained with a corrected covariance obtained at a previous time.

Further, in one aspect of the invention, in step S1, the fusion prediction result at the current time is obtained with an optimal fusion estimation result concerning the target state at the previous time.

According to another aspect of the invention, an optimization apparatus for multi-sensor target information fusion according to claim 5 is provided.

Further, in another aspect of the invention, the optimization apparatus also comprises: unit 5 for correcting the covariance obtained in unit 3B according to the transformation matrix obtained in unit 3A and the Kalman gain obtained in unit 3C, so as to obtain a corrected covariance.

Further, in another aspect of the invention, in unit 3B, the corresponding covariance of each set of actual measurement results at the current time is obtained with a corrected covariance obtained at a previous time.

Further, in another aspect of the invention, in unit 1, the fusion prediction result at the current time is obtained with an optimal fusion estimation result concerning the target state at the previous time.

According to a further aspect of the invention, a computer device is provided, which comprises a memory, a processor, and a computer program stored on the memory and operable on the processor, wherein the program implements, when executed by the processor, the steps of the method according to one aspect of the invention.

According to still another aspect of the invention, a recording medium having a computer program stored thereon is provided, wherein the program is executed by a computer to implement the steps of the method according to one aspect of the invention.

Compared with the prior art, the invention can obtain one or more of the beneficial effects as follows:

(1) according to the invention, a fusion weight can be calculated in real time to ensure that the result of weight assignment is appropriate in most scenarios; and

(2) according to the invention, Kalman filtering is applied to each set of measurement results from each sensor to obtain a corresponding covariance and optimal estimation result for all the measurement results, and then an optimal fusion estimation result concerning a target state is calculated, so that each corresponding weight of the optimal estimation result can be determined in conjunction with the covariance of the measurement results from the sensor. Therefore, even if the sensor is affected by hardware performance and environment and a detection result does not conform to a physical motion principle, the weight can be adjusted in real time to realize the optimal fusion estimation of the target and to improve the performance of fusion estimation.

## Brief Description of the Drawings

FIG. 1 is an example flowchart of an optimization method for multi-sensor target information fusion according to one implementation of the invention.

FIG. 2 is an example sub-flowchart of step S3 in FIG. 1 according to one embodiment of the invention.

FIG. 3 is an example sub-flowchart of step S4 in FIG. 1 according to one embodiment of the invention.

FIG. 4 is an example block diagram of an optimization apparatus for multi-sensor target information fusion according to one implementation of the invention.

FIG. 5 is an example block diagram of a computer device according to one implementation of the invention that is configured to perform an optimization method for multi-sensor target information fusion according to one implementation of the invention.

## Detailed Description of Embodiments

An optimization method and apparatus for multi-sensor target information fusion, a computer device, and a recording medium according to the invention will be further described in detail below in conjunction with the accompanying drawings. It should be noted that the following detailed description of embodiments is exemplary rather than limiting, and is intended to provide a basic understanding of the invention, but not to confirm key or decisive elements of the invention or limit the scope of protection.

The invention is described below with reference to block diagram illustrations, block diagrams and/or flowcharts of the method and apparatus in the embodiments of the invention. It should be understood that each block of the flowchart illustrations and/or the block diagrams and combinations of the flowchart illustrations and/or the block diagrams may be implemented by computer program instructions. These computer program instructions may be provided to a processor of a general-purpose computer, a special-purpose computer, or other programmable data processing devices to form a machine, such that the instructions, which are executed by the processor of the computer or the other programmable data processing devices, create components for implementing functions/operations specified in the flowcharts and/or blocks and/or one or more flow block diagrams.

These computer program instructions may be stored in a computer-readable memory and may instruct a computer or other programmable processors to implement functions in a specific manner, so that these instructions stored in the computer-readable memory constitute an article of manufacture, which contains instruction components for implementing the functions/operations specified in one or more blocks of the flowcharts and/or block diagrams.

These computer program instructions may be loaded onto a computer or other programmable data processors to enable a series of operational steps to be executed on the computer or the other programmable processors, so as to constitute a computer-implemented process, so that these instructions executed on the computer or the other programmable data processors provide steps for implementing the functions or operations specified in one or more blocks of the flowcharts and/or block diagrams. It should also be noted that in some alternative implementations, the functions/operations shown in the blocks may occur in an order different from that shown in the flowchart. For example, two blocks shown in sequence may actually be executed substantially simultaneously or may sometimes be executed in a reverse order, which depends on the functions/operations involved.

The optimization method and apparatus for multi-sensor target information fusion according to the invention can be applied, for example, in a scenario where targets around a vehicle are sensed. A motion state of any one of targets around the vehicle can be characterized by a relative longitudinal position to the vehicle, a longitudinal speed, a longitudinal acceleration, a relative transverse position to the vehicle, a transverse speed, and a transverse acceleration, and each set of measurement results sensed by each of multiple sensors on the vehicle is related to the six items above or can be calculated to obtain values of the six items. Where there are differences in terms of the characteristic of each sensor and the measurement error for each item, the optimization method and apparatus for multi-sensor target information fusion according to the invention that are described in detail below can be used to obtain an optimal fusion result for any target and rationally determine a fusion weight.

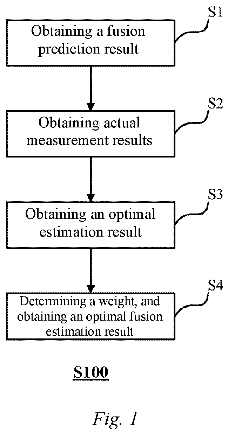

FIG. 1 is an example flowchart of an optimization method for multi-sensor target information fusion according to one implementation of the invention. As shown in FIG. 1, method S100 comprises the step of: obtaining, for each time, a fusion prediction result for all sensors concerning a target state at the current time (step S1).

In one example, for a time t, the following equation (1) can be used to determine a fusion prediction result concerning the target state of a target:

$$\dot{X}(t) = FX(t-1) + W(t) \quad \cdots$$

where $\dot{X}(t)$ is a fusion prediction result for all sensors concerning the target state at the time t, $F$ is a system state transition matrix, $X(t-1)$ is an optimal fusion estimation result concerning the target state at a time t-1 (described later), and $W(t)$ is a system noise.

As shown in FIG. 1, method S100 further comprises the step of: obtaining actual measurement results from each sensor concerning the target state at the current time (step S2).

As shown in FIG. 1, method S100 further comprises the step of: obtaining, for each set of actual measurement results, an optimal estimation result for a corresponding sensor concerning the target state at the current time based on the fusion prediction result and the set of actual measurement results (step S3).

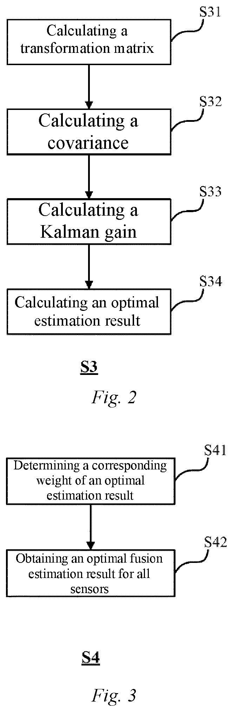

The details of step S3 will be described in detail in conjunction with FIG. 2.

Specifically, as shown in FIG. 2, step S3 comprises the step of: calculating, for each set of actual measurement results, a corresponding transformation matrix based on the fusion prediction result and the set of actual measurement results (step S31).

For each set of actual measurement results obtained by each sensor, the following equation (2) is used to determine the corresponding transformation matrix:

$$Z_{ik}(t) = H_{ik}\dot{X}(t) + V(t) \quad \ldots \quad (2)$$

where $Z_{ik}(t)$ is a kth set of actual measurement results from an ith sensor concerning the target state at the time t, $H_{ik}$ is a corresponding transformation matrix of the kth set of actual measurement results from the ith sensor, $X(t)$ is the fusion prediction result for all the sensors concerning the target state at the time t, and $V(t)$ is a measurement noise.

As shown in FIG. 2, step S3 further comprises the step of: calculating a corresponding covariance of each set of actual measurement results (step S32).

In one example, for each set of actual measurement results obtained by each sensor, the following equation (3) can be used to determine the corresponding covariance:

$$\dot{P}_{ik}(t) = F \cdot P_{ik}(t-1) \cdot F^T + Q \quad \ldots \quad (3)$$

where $\dot{P}_{ik}(t)$ is a corresponding covariance of the kth set of actual measurement results from the ith sensor concerning the target state at the time t, $F$ is the system state transition matrix, $F^T$ is a transposed matrix of the system state transition matrix, $P_{ik}(t-1)$ is a corresponding covariance of an optimal estimation result of the kth set of actual measurement results from the ith sensor at the time t-1 (described later), and $Q$ is the covariance of a system process noise.

As shown in FIG. 2, step S3 further comprises the step of: calculating, for each set of actual measurement results, a corresponding Kalman gain based on the corresponding transformation matrix and the corresponding covariance (step S33).

For each set of actual measurement results obtained by each sensor, the following equation (4) is used to determine the corresponding Kalman gain:

$$kg_{ik}(t) = \dot{P}_{ik}(t) \cdot H_{ik}^{\ T} / (H_{ik}\dot{P}_{ik}(t)H_{ik}^{\ T} + R) \quad \dots \quad (4)$$

where $kg_{ik}(t)$ is a corresponding Kalman gain of the $k^{th}$ set of actual measurement results from the $i^{th}$ sensor concerning the target state at the time t, $\dot{P}_{ik}(t)$ is the corresponding covariance of the $k^{th}$ set of actual measurement results from the $i^{th}$ sensor concerning the target state at the time t, $H_{ik}$ is the corresponding transformation matrix of the $k^{th}$ set of actual measurement results from the $i^{th}$ sensor, $H_{ik}^{\ T}$ is a transposed matrix of the corresponding transformation matrix of the $k^{th}$ set of actual measurement results from the $i^{th}$ sensor, and $R$ is the covariance of a measurement process noise.

As shown in FIG. 2, step S3 further comprises the step of: calculating, for each set of actual measurement results, the corresponding optimal estimation result for the corresponding sensor concerning the target state at the current time based on the fusion prediction result, the corresponding Kalman gain, the set of actual measurement results, and the corresponding transformation matrix (step S34).

For each set of actual measurement results obtained by each sensor, the following equation (5) is used to determine the corresponding optimal estimation result:

$$X_{ik}(t) = \dot{X}(t) + kg_{ik}(t)(Z_{ik}(t) - H_{ik}\dot{X}(t)) \quad \dots \quad (5)$$

where $X_{ik}(t)$ is a corresponding optimal estimation result of the $k^{th}$ set of actual measurement results from the $i^{th}$ sensor at the time t, $\dot{X}(t)$ is the fusion prediction result for all the sensors concerning the target state at the time t, $kg_{ik}(t)$ is the corresponding Kalman gain of the $k^{th}$ set of actual measurement results from the $i^{th}$ sensor concerning the target state at the time t, $Z_{ik}(t)$ is the $k^{th}$ set of actual measurement results from the $i^{th}$ sensor concerning the target state at the time t, and $H_{ik}$ is the corresponding transformation matrix of the $k^{th}$ set of actual measurement results from the $i^{th}$ sensor.

After the optimal estimation result for the corresponding sensor concerning the target state at the current time is calculated for each set of actual measurement results, the process returns to FIG. 1. As shown in FIG. 1, method S100 further comprises the step of: fusing optimal estimation results for all the sensors to determine a corresponding weight of each of the optimal estimation results and thus to obtain an optimal fusion estimation result concerning the target state at the current time (step S4).

In one example, the following equation (6) can be used to obtain the optimal fusion estimation result concerning the target state at the current time:

$$X(t) = f(X_{11}(t), X_{12}(t), \dots, X_{ik}(t), \dot{P}_{11}(t), \dot{P}_{12}(t), \dots, \dot{P}_{ik}(t)) \quad \dots \quad (6)$$

where $X(t)$ is an optimal fusion estimation result for all the sensors concerning the target state at the time t, $f$ is a fusion function, $X_{ik}(t)$ is the corresponding optimal estimation result of the $k^{th}$ set of actual measurement results from the $i^{th}$ sensor at the time t, and $\dot{P}_{ik}(t)$ is the corresponding covariance of the $k^{th}$ set of actual measurement results from the $i^{th}$ sensor concerning the target state at the time t.

The details of step S4 will be described in detail in conjunction with FIG. 3.

Specifically, as shown in FIG. 3, step S4 comprises the step of: determining the corresponding weight of each of the optimal estimation results according to the corresponding covariance of each set of actual measurement results (step S41).

In one example, after the equation (3) is used to calculate corresponding covariances (i.e., $\dot{P}_{11}(t), \dot{P}_{12}(t), \dots, \dot{P}_{ik}(t)$) of all sets of actual measurement results from all the sensors, a weight (i.e., $w_{11}(t), w_{12}(t), \dots, w_{ik}(t)$) is assigned to each corresponding optimal estimation result (i.e., $X_{11}(t), X_{12}(t), \dots, X_{ik}(t)$) of each set of actual measurement results according to the magnitude of the covariances.

As shown in FIG. 3, step S4 further comprises the step of: calculating the optimal fusion estimation result for all the sensors concerning the target state at the current time based on each of the optimal estimation results and the corresponding weight (step S42).

The assigned weights (i.e., $w_{11}(t), w_{12}(t), \dots, w_{ik}(t)$) are used to perform a weighted operation on the corresponding optimal estimation results (i.e., $X_{11}(t), X_{12}(t), \dots, X_{ik}(t)$, so as to obtain the optimal fusion estimation result for all the sensors concerning the target state at the time t. In addition, as shown in the equation (1), $X(t)$ at the time $t$ can also be used to calculate $X(t+1)$ at a time t + 1.

Optionally, in one embodiment, method S100 may further comprise the step of: correcting the covariance obtained in step S32 according to the transformation matrix obtained in step S31 and the Kalman gain obtained in step S33, so as to obtain a corrected covariance (step S5, not shown), wherein the corrected covariance can be used to calculate a corresponding covariance of corresponding actual measurement results at the next time of the current time (see equation (3) above).

In one example, the following equation (7) is used to obtain the corrected covariance at the current time:

$$P_{ik}(t) = (I - kg_{ik}(t)H_{ik})\dot{P}_{ik}(t) \quad \dots \quad (7)$$

where $P_{ik}(t)$ is a corrected covariance of the $k^{th}$ set of actual measurement results from the $i^{th}$ sensor at the time t, $I$ is an identity matrix, $kg_{ik}(t)$ is the corresponding Kalman gain of the $k^{th}$ set of actual measurement results from the $i^{th}$ sensor concerning the target state at the time t that is obtained in step S33, $H_{ik}$ is the corresponding transformation matrix of the $k^{th}$ set of actual measurement results from the $i^{th}$ sensor that is obtained in step S31, and $\dot{P}_{ik}(t)$ is the corresponding covariance of the $k^{th}$ set of actual measurement results from the $i^{th}$ sensor concerning the target state at the time t that is obtained in step S32, and in addition, $\dot{P}_{ik}(t)$ at the time t can also be used to calculate $\dot{P}_{ik}(t + 1)$ at the time t + 1.

Weights can be adjusted in real time by means of the steps above, so as to obtain an accurate target fusion estimation result.

In addition, it should be noted that although the sequence between steps is shown in FIGs. 1, 2 and 3, those skilled in the art should understand that FIGs. 1, 2 and 3 are merely examples, and the sequential relationship between the steps is not limited to the case shown in FIGs. 1, 2 and 3. For example, step S1 in FIG. 1 may be performed after step S2, or the two steps may be performed simultaneously. For another example, step S31 in FIG. 2 may be performed after step S32, or the two steps may be performed simultaneously, etc.

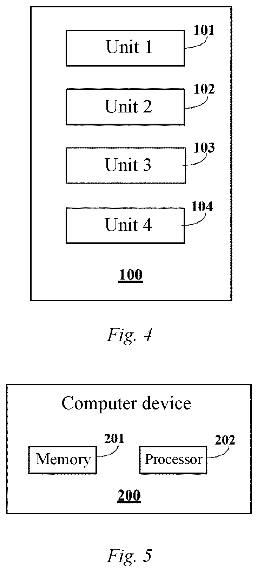

Next, the optimization apparatus for multi-sensor target information fusion for performing the method shown in FIG. 1 is described with reference to FIG. 4.

As shown in FIG. 4, the apparatus 100 comprises unit 1 101, which is configured to obtain, for each time, a fusion prediction result for all sensors concerning a target state at the current time.

In one example, for a time t, the following equation (8) can be used to determine a fusion prediction result concerning the target state of a target:

$$\dot{X}(t) = FX(t-1) + W(t) \quad \cdots \quad (8) \; ,$$

where $\dot{X}(t)$ is a fusion prediction result for all sensors concerning the target state at the time t, $F$ is a system state transition matrix, $X(t-1)$ is an optimal fusion estimation result concerning the target state at a time t-1 (described later), and $W(t)$ is a system noise.

As shown in FIG. 4, the apparatus 100 further comprises unit 2, which is configured to obtain actual measurement results from each sensor concerning the target state at the current time.

As shown in FIG. 4, the apparatus 100 further comprises unit 3, which is configured to obtain, for each set of actual measurement results, an optimal estimation result for a corresponding sensor concerning the target state at the current time based on the fusion prediction result and the set of actual measurement results.

The internal structure of unit 3 103 will be described below in detail.

Specifically, unit 3 103 comprises unit 3A (not shown), which is configured to calculate, for each set of actual measurement results, a corresponding transformation matrix based on the fusion prediction result and the set of actual measurement results.

For each set of actual measurement results obtained by each sensor, the following equation (9) is used to determine the corresponding transformation matrix:

$$Z_{ik}(t) = H_{ik}\dot{X}(t) + V(t) \quad \dots \quad (9)$$

where $Z_{ik}(t)$ is a $k^{th}$ set of actual measurement results from an $i^{th}$ sensor concerning the target state at the time t, $H_{ik}$ is a corresponding transformation matrix of the $k^{th}$ set of actual measurement results from the $i^{th}$ sensor, $\dot{X}(t)$ is the fusion prediction result for all the sensors concerning the target state at the time t, and $V(t)$ is a measurement noise.

Unit 3 103 further comprises unit 3B (not shown), which is configured to calculate a corresponding covariance of each set of actual measurement results.

In one example, for each set of actual measurement results obtained by each sensor, the following equation (10) can be used to determine the corresponding covariance:

$$\dot{P}_{ik}(t) = F \cdot P_{ik}(t-1) \cdot F^{T} + Q \quad \ldots \quad (10)$$

where $\dot{P}_{ik}(t)$ is a corresponding covariance of the $k^{th}$ set of actual measurement results from the $i^{th}$ sensor concerning the target state at the time t, $F$ is the system state transition matrix, $F^{T}$ is a transposed matrix of the system state transition matrix, $P_{ik}(t-1)$ is a corresponding covariance of an optimal estimation result of the $k^{th}$ set of actual measurement results from the $i^{th}$ sensor at the time t-1 (described later), and $Q$ is the covariance of a system process noise.

Unit 3 103 further comprises unit 3C (not shown), which is configured to calculate, for each set of actual measurement results, a corresponding Kalman gain based on the corresponding transformation matrix and the corresponding covariance.

For each set of actual measurement results obtained by each sensor, the following equation (11) is used to determine the corresponding Kalman gain:

$$kg_{ik}(t) = \dot{P}_{ik}(t) \cdot H_{ik}^{T} / (H_{ik}\dot{P}_{ik}(t)H_{ik}^{T} + R) \quad \ldots \quad (11)$$

where $kg_{ik}(t)$ is a corresponding Kalman gain of the $k^{th}$ set of actual measurement results from the $i^{th}$ sensor concerning the target state at the time t, $\dot{P}_{ik}(t)$ is the corresponding covariance of the $k^{th}$ set of actual measurement results from the $i^{th}$ sensor concerning the target state at the time t, $H_{ik}$ is the corresponding transformation matrix of the $k^{th}$ set of actual measurement results from the $i^{th}$ sensor, $H_{ik}^{T}$ is a transposed matrix of the corresponding transformation matrix of the $k^{th}$ set of actual measurement results from the $i^{th}$ sensor, and $R$ is the covariance of a measurement process noise.

Unit 3 103 further comprises unit 3D (not shown), which is configured to calculate, for each set of actual measurement results, the corresponding optimal estimation result for the corresponding sensor concerning the target state at the current time based on the fusion prediction result, the corresponding Kalman gain, the set of actual measurement results, and the corresponding transformation matrix.

For each set of actual measurement results obtained by each sensor, the following equation (12) is used to determine the corresponding optimal estimation result:

$$X_{ik}(t) = \dot{X}(t) + kg_{ik}(t)(Z_{ik}(t) - H_{ik}\dot{X}(t)) \quad \ldots \quad (12)$$

where $X_{ik}(t)$ is a corresponding optimal estimation result of the $k^{th}$ set of actual measurement results from the $i^{th}$ sensor at the time t, $\dot{X}(t)$ is the fusion prediction result for all the sensors concerning the target state at the time t, $kg_{ik}(t)$ is the corresponding Kalman gain of the $k^{th}$ set of actual measurement results from the $i^{th}$ sensor concerning the target state at the time t, $Z_{ik}(t)$ is the $k^{th}$ set of actual measurement results from the $i^{th}$ sensor concerning the target state at the time t, and $H_{ik}$ is the corresponding transformation matrix of the $k^{th}$ set of actual measurement results from the $i^{th}$ sensor.

After the optimal estimation result for the corresponding sensor concerning the target state at the current time is calculated for each set of actual measurement results, the process returns to FIG. 4. As shown in FIG. 4, the apparatus 100 further comprises unit 4 104, which is configured to fuse optimal estimation results for all the sensors to determine a corresponding weight of each of the optimal estimation results and thus to obtain an optimal fusion estimation result concerning the target state at the current time.

In one example, the following equation (13) can be used to obtain the optimal fusion estimation result concerning the target state at the current time:

$$X(t) = f(X_{11}(t), X_{12}(t), \ldots, X_{ik}(t), \dot{P}_{11}(t), \dot{P}_{12}(t), \ldots, \dot{P}_{ik}(t)) \quad \ldots \quad (13)$$

where $X(t)$ is an optimal fusion estimation result for all the sensors concerning the target state at the time t, $f$ is a fusion function, $X_{ik}(t)$ is the corresponding optimal estimation result of the $k^{th}$ set of actual measurement results from the $i^{th}$ sensor at the time t, and $\dot{P}_{ik}(t)$ is the corresponding covariance of the $k^{th}$ set of actual measurement results from the $i^{th}$ sensor concerning the target state at the time t.

The internal structure of unit 4 104 will be described below in detail.

Specifically, unit 4 104 comprises unit 4A (not shown), which is configured to determine the corresponding weight of each of the optimal estimation results according to the corresponding covariance of each set of actual measurement results.

In one example, after the equation (10) is used to calculate corresponding covariances (i.e., $\dot{P}_{11},(t), \dot{P}_{12}(t), \ldots, \dot{P}_{ik}(t)$) of all sets of actual measurement results from all the sensors, a weight (i.e., $w_{11}(t), w_{12}(t), \ldots, w_{ik}(t)$) is assigned to each corresponding optimal estimation result (i.e., $X_{11}(t), X_{12}(t), \ldots X_{ik}(t)$) of each set of actual measurement results according to the magnitude of the covariances.

Unit 4 104 further comprises unit 4B (not shown), which is configured to calculate the optimal fusion estimation result for all the sensors concerning the target state at the current time based on each of the optimal estimation results and the corresponding weight.

The assigned weights (i.e., $w_{11}(t), w_{12}(t),...,w_{ik}(t)$) are used to perform a weighted operation on the corresponding optimal estimation results (i.e., $X_{11}(t), X_{12}(t),...,X_{ik}(t)$), so as to obtain the optimal fusion estimation result for all the sensors concerning the target state at the time t. In addition, as shown in the equation (8), $X(t)$ at the time t can also be used to calculate $\dot{X}(t + 1)$ at a time t + 1.

Optionally, in one embodiment, the apparatus 100 may further comprise unit 5 (not shown), which is configured to correct the covariance obtained in unit 3B according to the transformation matrix obtained in unit 3A and the Kalman gain obtained in unit 3C, so as to obtain a corrected covariance, wherein the corrected covariance can be used to calculate a corresponding covariance of corresponding actual measurement results at the next time of the current time (see equation (10) above).

In one example, the following equation (14) is used to obtain the corrected covariance at the current time:

$$P_{ik}(t) = (I - kg_{ik}(t)H_{ik})\dot{P}_{ik}(t) \quad ... \quad (14)$$

where $\dot{P}_{ik}(t)$ is a corrected covariance of the $k^{th}$ set of actual measurement results from the $i^{th}$ sensor at the time t, $I$ is an identity matrix, $kg_{ik}(t)$ is the corresponding Kalman gain of the $k^{th}$ set of actual measurement results from the $i^{th}$ sensor concerning the target state at the time t that is obtained in step S33, $H_{ik}$ is the corresponding transformation matrix of the $k^{th}$ set of actual measurement results from the $i^{th}$ sensor that is obtained in step S31, and $\dot{P}_{ik}(t)$ is the corresponding covariance of the $k^{th}$ set of actual measurement results from the $i^{th}$ sensor concerning the target state at the time t that is obtained in step S32, and in addition, $P_{ik}(t)$ at the time t can also be used to calculate $\dot{P}_{ik}(t + 1)$ at the time t + 1.

Weights can be adjusted in real time by means of the units above, so as to obtain an accurate target fusion estimation result.

When applied to auxiliary driving, the optimization method and apparatus for multi-sensor target information fusion according to one implementation of the invention can enable an auxiliary driving system to employ more optimized data, thereby facilitating its decision-making and control, for example, making, based on the optimized data, a better decision for auxiliary driving functions or scenarios, such as adaptive cruise and emergency braking, with such functions or scenarios further including vehicle stability control and the like.

Although implementations of the optimization method and apparatus for multi-sensor target information fusion have been mainly described in the invention, the invention is not limited to these implementations, and the invention may be implemented in a way of: an auxiliary driving method comprising the method described above or an auxiliary driving system comprising the apparatus described above, or a computer device for performing the method described above or a computer program for performing the method described above, or a computer program for implementing functions of the apparatus described above or a computer-readable recording medium having the computer program recorded thereon.

FIG. 5 shows a computer device according to one implementation of the invention that is configured to perform an optimization method for multi-sensor target information fusion according to one implementation of the invention. As shown in FIG. 5, a computer device 200 comprises a memory 201 and a processor 202. Although not shown, the computer device 200 further comprises a computer program that is stored on the memory 201 and operable on the processor 202. The program implements, when executed by the processor, the steps, for example as shown in FIGs. 1, 2 and 3, of an optimization method for multi-sensor target information fusion according to one implementation of the invention.

In addition, as described above, the invention may also be implemented as a recording medium, which stores a program for enabling a computer to perform an optimization method for multi-sensor target information fusion according to one implementation of the invention.

Here, various types of recording media, such as disks (e.g., a magnetic disk, an optical disk, etc.), cards (e.g., a memory card, an optical card, etc.), semiconductor memories (e.g., a ROM, a non-volatile memory, etc.), and tapes (e.g., a magnetic tape, a cassette tape, etc.), can be used as the recording medium.

By recording, in these recording media, a computer program that enables a computer to perform the optimization method for multi-sensor target information fusion in the implementations above or a computer program that enables a computer to implement functions of the optimization apparatus for multi-sensor target information fusion in the implementations above and circulating the computer program, costs are reduced, and portability and versatility are improved.

Furthermore, the recording medium is loaded on a computer, the computer reads the computer program recorded in the recording medium and stores same in a memory, and a processor (central processing unit (CPU) and a micro processing unit (MPU)) provided on the computer reads out and executes the computer program from the memory, whereby the optimization method for multi-sensor target information fusion in the implementations above can be performed, and functions of the optimization apparatus for multi-sensor target information fusion in the implementations above can be implemented.

**Claims**

1. An optimization method for multi-sensor target information fusion, comprizing:

    step S1: obtaining, for each time, a fusion prediction result $\dot{X}(t)$ for all sensors concerning a motion state of target at the current time t;

    step S2: obtaining actual measurement results from each sensor concerning the motion state of target at the current time t;

    step S3: obtaining, for each set of actual measurement results $Z_{ik}(t)$, an optimal estimation result $X_{ik}(t)$ for a corresponding sensor concerning the motion state of target at the current time t based on the fusion prediction result $\dot{X}(t)$ and the set of actual measurement results $Z_{ik}(t)$ according to the following equation:

    $X_{ik}(t) = \dot{X}(t) + kg_{ik}(t)(Z_{ik}(t) - H_{ik}\dot{X}(t))$; and

    step S4: fusing optimal estimation results $X_{ik}(t)$ for all the sensors to determine a corresponding weight $w_{ik}(t)$ of each of the optimal estimation results $X_{ik}(t)$ and thus to obtain an optimal fusion estimation result $X(t)$ concerning the motion state of target at the current time t by performing a weighted operation on the optimal estimation results $X_{ik}(t)$ with the corresponding weight $w_{ik}(t)$,

    wherein $X_{ik}(t)$ is a corresponding optimal estimation result of a $k^{th}$ set of actual measurement results from a $i^{th}$ sensor at the time t, $\dot{X}(t)$ is a fusion prediction result for all the sensors concerning the motion state of target at the time t, $kg_{ik}(t)$ is a corresponding Kalman gain of the $k^{th}$ set of actual measurement results from the $i^{th}$ sensor concerning the motion state of target at the time t, $Z_{ik}(t)$ is the $k^{th}$ set of actual measurement results from the $i^{th}$ sensor concerning the motion state of target at the time t, and $H_{ik}$ is a corresponding transformation matrix of the $k^{th}$ set of actual measurement results from the $i^{th}$ sensor,

    wherein step S3 comprises:

    step S31: calculating, for each set of actual measurement results $Z_{ik}(t)$, a corresponding transformation matrix $H_{ik}$ based on the fusion prediction result $\dot{X}(t)$ and the set of actual measurement results $Z_{ik}(t)$ according to the following equation:

    $$Z_{ik}(t) = H_{ik}\dot{X}(t) + V(t)$$,

    wherein $V(t)$ is a measurement noise;

    step S32: calculating a corresponding covariance $\dot{P}_{ik}(t)$ of each set of actual measurement results;

    step S33: calculating, for each set of actual measurement results $Z_{ik}(t)$, a corresponding Kalman gain $kg_{ik}(t)$ based on the corresponding transformation matrix $H_{ik}$ and the corresponding covariance $\dot{P}_{ik}(t)$ according to the following equation:

    $$kg_{ik}(t) = \dot{P}_{ik}(t) \cdot H_{ik}^{T} /(H_{ik}\dot{P}_{ik}(t)H_{ik}^{T} + R)$$,

    wherein $kg_{ik}(t)$ is a corresponding Kalman gain of the $k^{th}$ set of actual measurement results from the $i^{th}$ sensor concerning the motion state of target at the time t, $\dot{P}_{ik}(t)$ is a corresponding covariance of the $k^{th}$ set of actual measurement results from the $i^{th}$ sensor concerning the motion state of target at the time t, $H_{ik}$ is a corresponding transformation matrix of the $k^{th}$ set of actual measurement results from the $i^{th}$ sensor, $H_{ik}^{T}$ is a transposed matrix of the corresponding transformation matrix of the $k^{th}$ set of actual measurement results from the $i^{th}$ sensor, and R is the covariance of a measurement process noise; and

    step S34: calculating, for each set of actual measurement results $Z_{ik}(t)$, the corresponding optimal estimation result $X_{ik}(t)$ for the corresponding sensor concerning the motion state of target at the current time t based on the fusion prediction result $\dot{X}(t)$, the corresponding Kalman gain $kg_{ik}(t)$, the set of actual measurement results $Z_{ik}(t)$, and the corresponding transformation matrix $H_{ik}$ according to the following equation:

$$X_{ik}(t) = \dot{X}(t) + kg_{ik}(t)(Z_{ik}(t) - H_{ik}\dot{X}(t))$$

and wherein step S4 comprises:
determining the corresponding weight $w_{ik}(t)$ of each of the optimal estimation results according to the corresponding covariance $\dot{P}_{ik}(t)$ of each set of actual measurement results.

2. The optimization method according to claim 1, further comprising:
step S5: correcting the covariance $\dot{P}_{ik}(t)$ obtained in step S32 according to the transformation matrix $H_{ik}$ obtained in step S31 and the Kalman gain $kg_{ik}(t)$ obtained in step S33, so as to obtain a corrected covariance $P_{ik}(t)$.

3. The optimization method according to claim 2, wherein in step S32, the corresponding covariance $\dot{P}_{ik}(t)$ of each set of actual measurement results at the current time t is obtained with a corrected covariance obtained at a previous time t-1, $P_{ik}(t-1)$.

4. The method according to any of claims 1 to 3, wherein in step S1, the fusion prediction result $\dot{X}(t)$ at the current time t is obtained with an optimal fusion estimation result concerning the motion state of target at the previous time t-1, $X(t-1)$.

5. An optimization apparatus for multi-sensor target information fusion, comprizing :

unit 1 for obtaining, for each time, a fusion prediction result $\dot{X}(t)$ for all sensors concerning a motion state of target at the current time t;
unit 2 for obtaining actual measurement results from each sensor concerning the motion state of target at the current time t;
unit 3 for obtaining, for each set of actual measurement results $Z_{ik}(t)$, an optimal estimation result $X_{ik}(t)$ for a corresponding sensor concerning the motion state of target at the current time t based on the fusion prediction result $\dot{X}(t)$ and the set of actual measurement results $Z_{ik}(t)$ according to the following equation:

$$X_{ik}(t) = \dot{X}(t) + kg_{ik}(t)(Z_{ik}(t) - H_{ik}\dot{X}(t))$$

; and
unit 4 for fusing optimal estimation results $X_{ik}(t)$ for all the sensors to determine a corresponding weight $w_{ik}(t)$ of each of the optimal estimation results $X_{ik}(t)$ and thus to obtain an optimal fusion estimation result $X(t)$ concerning the motion state of target at the current time t by performing a weighted operation on the optimal estimation results $X_{ik}(t)$ with the corresponding weight $w_{ik}(t)$,
wherein $X_{ik}(t)$ is a corresponding optimal estimation result of a kth set of actual measurement results from a ith sensor at the time t, $\dot{X}(t)$ is a fusion prediction result for all the sensors concerning the motion state of target at the time t, $kg_{ik}(t)$ is a corresponding Kalman gain of the kth set of actual measurement results from the ith sensor concerning the motion state of target at the time t, $Z_{ik}(t)$ is the kth set of actual measurement results from the ith sensor concerning the motion state of target at the time t, and $H_{ik}$ is a corresponding transformation matrix of the kth set of actual measurement results from the ith sensor,
wherein unit 3 comprises:

unit 3A for calculating, for each set of actual measurement results $Z_{ik}(t)$, a corresponding transformation matrix $H_{ik}$ based on the fusion prediction result $\dot{X}(t)$ and the set of actual measurement results $Z_{ik}(t)$ according to the following equation:

$$Z_{ik}(t) = H_{ik}\dot{X}(t) + V(t)$$

,

wherein $V(t)$ is a measurement noise;
unit 3B for calculating a corresponding covariance $\dot{P}_{ik}(t)$ of each set of actual measurement results;
unit 3C for calculating, for each set of actual measurement results $Z_{ik}(t)$, a corresponding Kalman gain $kg_{ik}(t)$ based on the corresponding transformation matrix $H_{ik}$ and the corresponding covariance $\dot{P}_{ik}(t)$ according to the following equation:

$$kg_{ik}(t) = \dot{P}_{ik}(t) \cdot H_{ik}^{\ T} / (H_{ik}\dot{P}_{ik}(t)H_{ik}^{\ T} + R)$$

,

wherein $kg_{ik}(t)$ is a corresponding Kalman gain of the kth set of actual measurement results from the ith sensor concerning the motion state of target at the time t, $\dot{P}_{ik}(t)$ is a corresponding covariance of the kth set of actual measurement results from the ith sensor concerning the motion state of target at the time t, $H_{ik}$ is a corresponding transformation matrix of the kth set of actual measurement results from the ith sensor, $H_{ik}^{\ T}$ is a transposed matrix of the corresponding transformation matrix of the kth set of actual measurement results from the ith sensor, and R is the covariance of a measurement process noise; and

unit 3D for calculating, for each set of actual measurement results $Z_{ik}(t)$, the corresponding optimal estimation result $X_{ik}(t)$ for the corresponding sensor concerning the motion state of target at the current time t based on the fusion prediction result $\dot{X}(t)$, the corresponding Kalman gain $kg_{ik}(t)$, the set of actual measurement results $Z_{ik}(t)$, and the corresponding transformation matrix $H_{ik}$ according to the following equation:

$$X_{ik}(t) = \dot{X}(t) + kg_{ik}(t)(Z_{ik}(t) - H_{ik}\dot{X}(t))$$

and wherein unit 4 comprises:

unit 4A for determining the corresponding weight $w_{ik}(t)$ of each of the optimal estimation results according to the corresponding covariance $\dot{P}_{ik}(t)$ of each set of actual measurement results.

6. The optimization apparatus according to claim 5, further comprising:
unit 5 for correcting the covariance $\dot{P}_{ik}(t)$ obtained in unit 3B according to the transformation matrix $H_{ik}$ obtained in unit 3A and the Kalman gain $kg_{ik}(t)$ obtained in unit 3C, so as to obtain a corrected covariance $P_{ik}(t)$.

7. The optimization apparatus according to claim 6, wherein in unit 3B, the corresponding covariance $\dot{P}_{ik}(t)$ of each set of actual measurement results at the current time t is obtained with a corrected covariance obtained at a previous time t-1, $P_{ik}(t - 1)$.

8. The optimization apparatus according to any of claims 5 to 7, wherein in unit 1, the fusion prediction result $\dot{X}(t)$ at the current time t is obtained with an optimal fusion estimation result concerning the motion state of target at the previous time t-1, $X(t - 1)$.

9. A recording medium having a computer program stored thereon, wherein the program is executed by a computer to implement the steps of the method according to any of claims 1 to 4.

**Patentansprüche**

1. Optimierungsverfahren für eine Fusion von Zielinformationen mehrerer Sensoren, umfassend:

Schritt S1: Erhalten, für jeden Zeitpunkt, eines Fusionsvorhersageergebnisses $\dot{X}(t)$ für alle Sensoren bezüglich eines Bewegungszustands eines Ziels zum aktuellen Zeitpunkt t;

Schritt S2: Erhalten tatsächlicher Messergebnisse von jedem Sensor bezüglich des Bewegungszustands des Ziels zum aktuellen Zeitpunkt t;

Schritt S3: Erhalten, für jeden Satz von tatsächlichen Messergebnissen $Z_{ik}(t)$, eines optimalen Schätzergebnisses $X_{ik}(t)$ für einen entsprechenden Sensor bezüglich des Bewegungszustands des Ziels zum aktuellen Zeitpunkt t basierend auf dem Fusionsvorhersageergebnis $\dot{X}(t)$ und dem Satz von tatsächlichen Messergebnissen $Z_{ik}(t)$ gemäß der folgenden Gleichung:

$$X_{ik}(t) = \dot{X}(t) + kg_{ik}(t)(Z_{ik}(t) - H_{ik}\dot{X}(t)); \quad \text{und}$$

Schritt S4: Fusionieren optimaler Schätzergebnisse $X_{ik}(t)$ für alle Sensoren, um eine entsprechende Gewichtung $w_{ik}(t)$ jedes der optimalen Schätzergebnisse $X_{ik}(t)$ zu bestimmen und somit ein optimales Fusionsschätzergebnis $X(t)$ bezüglich des Bewegungszustands des Ziels zum aktuellen Zeitpunkt t durch Durchführen einer gewichteten Operation an den optimalen Schätzergebnissen $X_{ik}(t)$ mit der entsprechenden Gewichtung $w_{ik}(t)$ zu erhalten, wobei $X_{ik}(t)$ ein entsprechendes optimales Schätzergebnis eines k-ten Satzes von tatsächlichen Messergebnissen von einem i-ten Sensor zum Zeitpunkt t ist, $\dot{X}(t)$ ein Fusionsvorhersageergebnis für alle Sensoren bezüglich des Bewegungszustands des Ziels zum Zeitpunkt t ist, $kg_{ik}(t)$ eine entsprechende Kalman-Verstärkung des k-ten Satzes von tatsächlichen Messergebnissen von dem i-ten Sensor bezüglich des Bewegungszustands des Ziels zum Zeitpunkt t ist, $Z_{ik}(t)$ der k-te Satz von tatsächlichen Messergebnissen von dem i-ten Sensor bezüglich des Bewegungszustands des Ziels zum Zeitpunkt t ist und $H_{ik}$ eine entsprechende Transformationsmatrix des k-ten Satzes von tatsächlichen Messergebnissen von dem i-ten Sensor ist,

wobei Schritt S3 Folgendes umfasst:

Schritt S31: Berechnen, für jeden Satz von tatsächlichen Messergebnissen $Z_{ik}(t)$, einer entsprechenden Transformationsmatrix $H_{ik}$ basierend auf dem Fusionsvorhersageergebnis $\dot{X}(t)$ und dem Satz von tatsächlichen Messergebnissen $Z_{ik}(t)$ gemäß der folgenden Gleichung:

$Z_{ik}(t) = H_{ik}\dot{X}(t) + V(t)$, wobei $V(t)$ ein Messrauschen ist;

Schritt S32: Berechnen einer entsprechenden Kovarianz $\dot{P}_{ik}(t)$ jedes Satzes von tatsächlichen Messergebnissen;

Schritt S33: Berechnen, für jeden Satz von tatsächlichen Messergebnissen $Z_{ik}(t)$, einer entsprechenden Kalman-Verstärkung $kg_{ik}(t)$ basierend auf der entsprechenden Transformationsmatrix $H_{ik}$ und der entsprechenden Kovarianz $\dot{P}_{ik}(t)$ gemäß der folgenden Gleichung:

$$kg_{ik}(t) = \dot{P}_{ik}(t) \cdot H_{ik}^T / (H_{ik}\dot{P}_{ik}(t)H_{ik}^T + R)$$

, wobei $kg_{ik}(t)$ eine entsprechende Kalman-Verstärkung des k-ten Satzes von tatsächlichen Messergebnissen von dem i-ten Sensor bezüglich des Bewegungszustands des Ziels zum Zeitpunkt t ist, $\dot{P}_{ik}(t)$ eine entsprechende Kovarianz des k-ten Satzes von tatsächlichen Messergebnissen von dem i-ten Sensor bezüglich des Bewegungszustands des Ziels zum Zeipunkt t ist, $H_{ik}$ eine entsprechende Transformationsmatrix des k-ten Satzes von tatsächlichen Messergebnissen von dem i-ten Sensor ist, $H_{ik}^T$ eine transponierte Matrix der entsprechenden Transformationsmatrix des k-ten Satzes von tatsächlichen Messergebnissen von dem i-ten Sensor ist und $R$ die Kovarianz eines Messprozessrauschens ist; und

Schritt S34: Berechnen, für jeden Satz von tatsächlichen Messergebnissen $Z_{ik}(t)$, des entsprechenden optimalen Schätzergebnisses $X_{ik}(t)$ für den entsprechenden Sensor bezüglich des Bewegungszustands des Ziels zum aktuellen Zeitpunkt t basierend auf dem Fusionsvorhersageergebnis $\dot{X}(t)$, der entsprechenden Kalman-Verstärkung $kg_{ik}(t)$, dem Satz von tatsächlichen Messergebnissen $Z_{ik}(t)$ und der entsprechenden Transformationsmatrix $H_{ik}$ gemäß der folgenden Gleichung:

$$X_{ik}(t) = \dot{X}(t) + kg_{ik}(t)(Z_{ik}(t) - H_{ik}\dot{X}(t)),$$

und wobei Schritt S4 Folgendes umfasst:

Bestimmen der entsprechenden Gewichtung $w_{ik}(t)$ jedes der optimalen Schätzergebnisse gemäß der entsprechenden Kovarianz $\dot{P}_{ik}(t)$ jedes Satzes von tatsächlichen Messergebnissen.

2. Optimierungsverfahren nach Anspruch 1, ferner umfassend:

Schritt S5: Korrigieren der in Schritt S32 erhaltenen Kovarianz $\dot{P}_{ik}(t)$ gemäß der in Schritt S31 erhaltenen Transformationsmatrix $H_{ik}$ und der in Schritt S33 erhaltenen Kalman-Verstärkung $kg_{ik}(t)$, um eine korrigierte Kovarianz $P_{ik}(t)$ zu erhalten.

3. Optimierungsverfahren nach Anspruch 2, wobei in Schritt S32 die entsprechende Kovarianz $\dot{P}_{ik}(t)$ jedes Satzes von tatsächlichen Messergebnissen zum aktuellen Zeitpunkt t mit einer korrigierten Kovarianz, die zu einem vorhergehenden Zeitpunkt t-1 erhalten wurde, $P_{ik}(t - 1)$, erhalten wird.

4. Verfahren nach einem der Ansprüche 1 bis 3, wobei in Schritt S1 das Fusionsvorhersageergebnis $\dot{X}(t)$ zum aktuellen Zeitpunkt t mit einem optimalen Fusionsschätzergebnis bezüglich des Bewegungszustands des Ziels zum vorhergehenden Zeitpunkt t-1, $X(t - 1)$, erhalten wird.

5. Optimierungsvorrichtung für eine Fusion von Zielinformationen mehrerer Sensoren, umfassend:

Einheit 1 zum Erhalten, für jeden Zeitpunkt, eines Fusionsvorhersageergebnisses $\dot{X}(t)$ für alle Sensoren bezüglich eines Bewegungszustands eines Ziels zum aktuellen Zeitpunkt t;

Einheit 2 zum Erhalten tatsächlicher Messergebnisse von jedem Sensor bezüglich des Bewegungszustands des Ziels zum aktuellen Zeitpunkt t;

Einheit 3 zum Erhalten, für jeden Satz von tatsächlichen Messergebnissen $Z_{ik}(t)$, eines optimalen Schätzergebnisses $X_{ik}(t)$ für einen entsprechenden Sensor bezüglich des Bewegungszustands des Ziels zum aktuellen Zeitpunkt t basierend auf dem Fusionsvorhersageergebnis $\dot{X}(t)$ und dem Satz von tatsächlichen Messergebnissen $Z_{ik}(t)$ gemäß der folgenden Gleichung:

$$X_{ik}(t) = \dot{X}(t) + kg_{ik}(t)(Z_{ik}(t) - H_{ik}\dot{X}(t));$$

und

Einheit 4 zum Fusionieren optimaler Schätzergebnisse $X_{ik}(t)$ für alle Sensoren, um eine entsprechende Gewichtung $w_{ik}(t)$ jedes der optimalen Schätzergebnisse $X_{ik}(t)$ zu bestimmen und somit ein optimales Fusionsschätzergebnis $X(t)$ bezüglich des Bewegungszustands des Ziels zum aktuellen Zeitpunkt t durch Durchführen einer gewichteten Operation an den optimalen Schätzergebnissen $X_{ik}(t)$ mit der entsprechenden Gewichtung $w_{ik}(t)$ zu erhalten,

wobei $X_{ik}(t)$ ein entsprechendes optimales Schätzergebnis eines k-ten Satzes von tatsächlichen Messergebnissen von einem i-ten Sensor zum Zeitpunkt t ist, $\dot{X}(t)$ ein Fusionsvorhersageergebnis für alle Sensoren bezüglich des Bewegungszustands des Ziels zum Zeitpunkt t ist, $kg_{ik}(t)$ eine entsprechende Kalman-Verstärkung des k-ten Satzes von tatsächlichen Messergebnissen von dem i-ten Sensor bezüglich des Bewegungszustands des Ziels zum Zeitpunkt t ist, $Z_{ik}(t)$ der k-te Satz von tatsächlichen Messergebnissen von dem i-ten Sensor bezüglich des Bewegungszustands des Ziels zum Zeitpunkt t ist und $H_{ik}$ eine entsprechende Transformationsmatrix des k-ten Satzes von tatsächlichen Messergebnissen von dem i-ten Sensor ist,

wobei Einheit 3 Folgendes umfasst:

Einheit 3A zum Berechnen, für jeden Satz von tatsächlichen Messergebnissen $Z_{ik}(t)$, einer entsprechenden Transformationsmatrix $H_{ik}$ basierend auf dem Fusionsvorhersageergebnis $\dot{X}(t)$ und dem Satz von tatsächlichen Messergebnissen $Z_{ik}(t)$ gemäß der folgenden Gleichung:

$Z_{ik}(t) = H_{ik}\dot{X}(t) + V(t)$, wobei $V(t)$ ein Messrauschen ist;

Einheit 3B zum Berechnen einer entsprechenden Kovarianz $\dot{P}_{ik}(t)$ jedes Satzes von tatsächlichen Messergebnissen;

Einheit 3C zum Berechnen, für jeden Satz von tatsächlichen Messergebnissen $Z_{ik}(t)$, einer entsprechenden Kalman-Verstärkung $kg_{ik}(t)$ basierend auf der entsprechenden Transformationsmatrix $H_{ik}$ und der entsprechenden Kovarianz $\dot{P}_{ik}(t)$ gemäß der folgenden Gleichung:

$$kg_{ik}(t) = \dot{P}_{ik}(t) \cdot H_{ik}^{T}/(H_{ik}\dot{P}_{ik}(t)H_{ik}^{T} + R)$$ , wobei $kg_{ik}(t)$ eine entsprechende Kalman-Verstärkung des k-ten Satzes von tatsächlichen Messergebnissen von dem i-ten Sensor bezüglich des Bewegungszustands des Ziels zum Zeitpunkt t ist, $\dot{P}_{ik}(t)$ eine entsprechende Kovarianz des k-ten Satzes von tatsächlichen Messergebnissen von dem i-ten Sensor bezüglich des Bewegungszustands des Ziels zum Zeipunkt t ist, $H_{ik}$ eine entsprechende Transformationsmatrix des k-ten Satzes von tatsächlichen Messergebnissen von dem i-ten Sensor ist, $H_{ik}^{T}$ eine transponierte Matrix der entsprechenden Transformationsmatrix des k-ten Satzes von tatsächlichen Messergebnissen von dem i-ten Sensor ist und $R$ die Kovarianz eines Messprozessrauschens ist; und

Einheit 3D zum Berechnen, für jeden Satz von tatsächlichen Messergebnissen $Z_{ik}(t)$, des entsprechenden optimalen Schätzergebnisses $X_{ik}(t)$ für den entsprechenden Sensor bezüglich des Bewegungszustands des Ziels zum aktuellen Zeitpunkt t basierend auf dem Fusionsvorhersageergebnis $\dot{X}(t)$, der entsprechenden Kalman-Verstärkung $kg_{ik}(t)$, dem Satz von tatsächlichen Messergebnissen $Z_{ik}(t)$ und der entsprechenden Transformationsmatrix $H_{ik}$ gemäß der folgenden Gleichung:

$$X_{ik}(t) = \dot{X}(t) + kg_{ik}(t)(Z_{ik}(t) - H_{ik}\dot{X}(t))$$

und wobei Einheit 4 Folgendes umfasst:

Einheit 4A zum Bestimmen der entsprechenden Gewichtung $w_{ik}(t)$ jedes der optimalen Schätzergebnisse gemäß der entsprechenden Kovarianz $\dot{P}_{ik}(t)$ jedes Satzes von tatsächlichen Messergebnissen.

6. Optimierungsvorrichtung nach Anspruch 5, ferner umfassend:

Einheit 5 zum Korrigieren der in Einheit 3B erhaltenen Kovarianz $\dot{P}_{ik}(t)$ gemäß der in Einheit 3A erhaltenen Transformationsmatrix $H_{ik}$ und der in Einheit 3C erhaltenen Kalman-Verstärkung $kg_{ik}(t)$, um eine korrigierte Kovarianz $P_{ik}(t)$ zu erhalten.

7. Optimierungsvorrichtung nach Anspruch 6, wobei in Einheit 3B die entsprechende Kovarianz $\dot{P}_{ik}(t)$ jedes Satzes von tatsächlichen Messergebnissen zum aktuellen Zeitpunkt t mit einer korrigierten Kovarianz, die zu einem vorhergehenden Zeitpunkt t-1 erhalten wurde, $P_{ik}(t - 1)$, erhalten wird.

8. Optimierungsvorrichtung nach einem der Ansprüche 5 bis 7, wobei in Einheit 1 das Fusionsvorhersageergebnis $\dot{X}(t)$ zum aktuellen Zeitpunkt t mit einem optimalen Fusionsschätzergebnis bezüglich des Bewegungszustands des Ziels zum vorhergehenden Zeitpunkt t-1, $X(t - 1)$, erhalten wird.

9. Aufzeichnungsmedium, auf dem ein Computerprogramm gespeichert ist, wobei das Programm durch einen Computer ausgeführt wird, um die Schritte des Verfahrens nach einem der Ansprüche 1 bis 4 zu implementieren.

**Revendications**

1. Procédé d'optimisation pour la fusion d'informations sur une cible provenant de capteurs multiples, comprenant :

   étape S1 : obtention, pour chaque instant, d'un résultat de prédiction de fusion $\dot{X}(t)$ pour tous les capteurs concernant un état de mouvement de la cible à l'instant présent t ;
   étape S2 : obtention de résultats de mesure effectifs auprès de chaque capteur concernant l'état de mouvement de la cible à l'instant t ;
   étape S3 : obtention, pour chaque ensemble de résultats de mesure effectifs $Z_{ik}(t)$, d'un résultat d'estimation optimal $X_{ik}(t)$ pour un capteur correspondant concernant l'état de mouvement de la cible à l'instant présent t sur la base du résultat de prédiction de fusion $\dot{X}(t)$ et de l'ensemble de résultats de mesure effectifs $Z_{ik}(t)$ selon l'équation suivante :

   $X_{ik}(t) = \dot{X}(t) + kg_{ik}(t)(Z_{ik}(t) - H_{ik}\dot{X}(t))$ ; et
   étape S4 : fusion de résultats d'estimation optimaux $X_{ik}(t)$ pour tous les capteurs afin de déterminer un poids $w_{ik}(t)$ correspondant de chacun des résultats d'estimation optimaux $X_{ik}(t)$ et d'obtenir ainsi un résultat d'estimation de fusion optimal $X(t)$ concernant l'état de mouvement de la cible à l'instant présent t par réalisation d'une opération pondérée sur les résultats d'estimation optimaux $X_{ik}(t)$ avec le poids $w_{ik}(t)$ correspondant,
   $X_{ik}(t)$ représentant un résultat d'estimation optimal correspondant d'un k-ième ensemble de résultats de mesure effectifs provenant d'un i-ème capteur à l'instant t, $\dot{X}(t)$ représentant un résultat de prédiction de fusion pour tous les capteurs concernant l'état de mouvement de la cible à l'instant t, $kg_{ik}(t)$ représentant un gain de Kalman correspondant du k-ième ensemble de résultats de mesure effectifs provenant du i-ème capteur concernant l'état de mouvement de la cible à l'instant t, $Z_{ik}(t)$ représentant le k-ième ensemble de résultats de mesure effectifs provenant du i-ème capteur concernant l'état de mouvement de la cible à l'instant t, et $H_{ik}$ représentant une matrice de transformation correspondante du k-ième ensemble de résultats de mesure effectifs provenant du i-ème capteur,
   l'étape S3 comprenant :
   étape S31 : calcul, pour chaque ensemble de résultats de mesure effectifs $Z_{ik}(t)$, d'une matrice de transformation $H_{ik}$ correspondante sur la base du résultat de prédiction de fusion $\dot{X}(t)$ et de l'ensemble de résultats de mesure effectifs $Z_{ik}(t)$ selon l'équation suivante :

   $Z_{ik}(t) = H_{ik}\dot{X}(t) + V(t)$, $V(t)$ représentant un bruit de mesure ;
   étape S32 : calcul d'une covariance $\dot{P}_{ik}(t)$ correspondante de chaque ensemble de résultats de mesure effectifs ;
   étape S33 : calcul, pour chaque ensemble de résultats de mesure effectifs $Z_{ik}(t)$, d'un gain de Kalman $kg_{ik}(t)$ correspondant sur la base de la matrice de transformation $H_{ik}$ correspondante et de la covariance $\dot{P}_{ik}(t)$ correspondante selon l'équation suivante :

   $$kg_{ik}(t) = \dot{P}_{ik}(t) \cdot H_{ik}^{T}/\left(H_{ik}\dot{P}_{ik}(t)H_{ik}^{T} + R\right)$$ , $kg_{ik}(t)$ représentant un gain de Kalman correspondant du k-ième ensemble de résultats de mesure effectifs provenant du i-ème capteur concernant l'état de mouvement de la cible à l'instant t, $\dot{P}_{ik}(t)$ représentant une covariance correspondante du k-ième ensemble de résultats de mesure effectifs provenant du i-ème capteur concernant l'état de mouvement de la cible à l'instant t, $H_{ik}$ représentant une matrice de transformation correspondante du k-ième ensemble de résultats de mesure effectifs provenant du i-ème capteur, $H_{ik}^T$ représentant une matrice transposée de la matrice de transformation correspondante du k-ième ensemble de résultats de mesure effectifs provenant du i-ème capteur, et $R$ représentant la covariance d'un bruit du processus de mesure ; et

étape S34 : calcul, pour chaque ensemble de résultats de mesure effectifs $Z_{ik}(t)$, du résultat d'estimation optimal $X_{ik}(t)$ correspondant pour le capteur correspondant concernant l'état de mouvement de la cible à l'instant présent t sur la base du résultat de prédiction de fusion $\dot{X}(t)$, du gain de Kalman $kg_{ik}(t)$ correspondant, de l'ensemble de résultats de mesure effectifs $Z_{ik}(t)$, et de la matrice de transformation $H_{ik}$ correspondante selon l'équation suivante :

$$X_{ik}(t) = \dot{X}(t) + kg_{ik}(t)\left(Z_{ik}(t) - H_{ik}\dot{X}(t)\right)$$

et l'étape S4 comprenant :
détermination du poids $w_{ik}(t)$ correspondant de chacun des résultats d'estimation optimaux selon la covariance $\dot{P}_{ik}(t)$ correspondante de chaque ensemble de résultats de mesure effectifs.

2. Procédé d'optimisation selon la revendication 1, comprenant en outre :
étape S5 : correction de la covariance $\dot{P}_{ik}(t)$ obtenue à l'étape S32 selon la matrice de transformation $H_{ik}$ obtenue à l'étape S31 et le gain de Kalman $kg_{ik}(t)$ obtenu à l'étape S33, de manière à obtenir une covariance corrigée $P_{ik}(t)$.

3. Procédé d'optimisation selon la revendication 2, dans lequel, à l'étape S32, la covariance $\dot{P}_{ik}(t)$ correspondante de chaque ensemble de résultats de mesure effectifs à l'instant présent t est obtenue avec une covariance corrigée obtenue à un instant précédent t-1, $P_{ik}(t-1)$.

4. Procédé selon l'une quelconque des revendications 1 à 3, dans lequel, à l'étape S1, le résultat de prédiction de fusion $\dot{X}(t)$ à l'instant présent t est obtenu avec un résultat d'estimation de fusion optimal concernant l'état de mouvement de la cible à l'instant précédent t-1, $X(t-1)$.

5. Appareil d'optimisation pour la fusion d'informations sur une cible provenant de capteurs multiples, comprenant :

une unité 1 destinée à obtenir, pour chaque instant, un résultat de prédiction de fusion $\dot{X}(t)$ pour tous les capteurs concernant un état de mouvement de la cible à l'instant présent t ;
une unité 2 destinée à obtenir des résultats de mesure effectifs auprès de chaque capteur concernant l'état de mouvement de la cible à l'instant t ;
une unité 3 destinée à obtenir, pour chaque ensemble de résultats de mesure effectifs $Z_{ik}(t)$, un résultat d'estimation optimal $X_{ik}(t)$ pour un capteur correspondant concernant l'état de mouvement de la cible à l'instant présent t sur la base du résultat de prédiction de fusion $\dot{X}(t)$ et de l'ensemble de résultats de mesure effectifs $Z_{ik}(t)$ selon l'équation suivante :

$$X_{ik}(t) = \dot{X}(t) + kg_{ik}(t)\left(Z_{ik}(t) - H_{ik}\dot{X}(t)\right) ;$$

et
une unité 4 destinée à fusionner des résultats d'estimation optimaux $X_{ik}(t)$ pour tous les capteurs afin de déterminer un poids $w_{ik}(t)$ correspondant de chacun des résultats d'estimation optimaux $X_{ik}(t)$ et d'obtenir ainsi un résultat d'estimation de fusion optimal $X(t)$ concernant l'état de mouvement de la cible à l'instant présent t en réalisant une opération pondérée sur les résultats d'estimation optimaux $X_{ik}(t)$ avec le poids $w_{ik}(t)$ correspondant, $X_{ik}(t)$ représentant un résultat d'estimation optimal correspondant d'un k-ième ensemble de résultats de mesure effectifs provenant d'un i-ème capteur à l'instant t, $\dot{X}(t)$ représentant un résultat de prédiction de fusion pour tous les capteurs concernant l'état de mouvement de la cible à l'instant t, $kg_{ik}(t)$ représentant un gain de Kalman correspondant du k-ième ensemble de résultats de mesure effectifs provenant du i-ème capteur concernant l'état de mouvement de la cible à l'instant t, $Z_{ik}(t)$ représentant le k-ième ensemble de résultats de mesure effectifs provenant du i-ème capteur concernant l'état de mouvement de la cible à l'instant t, et $H_{ik}$ représentant une

matrice de transformation correspondante du k-ième ensemble de résultats de mesure effectifs provenant du i-ème capteur,

l'unité 3 comprenant :

une unité 3A destinée à calculer, pour chaque ensemble de résultats de mesure effectifs $Z_{ik}(t)$, une matrice de transformation $H_{ik}$ correspondante sur la base du résultat de prédiction de fusion $\dot{X}(t)$ et de l'ensemble de résultats de mesure effectifs $Z_{ik}(t)$ selon l'équation suivante :

$Z_{ik}(t) = H_{ik}\dot{X}(t) + V(t)$, $V(t)$ représentant un bruit de mesure ; une unité 3B destinée à calculer une covariance $\dot{P}_{ik}(t)$ correspondante de chaque ensemble de résultats de mesure effectifs ;

une unité 3C destinée à calculer, pour chaque ensemble de résultats de mesure effectifs $Z_{ik}(t)$, un gain de Kalman $kg_{ik}(t)$ correspondant sur la base de la matrice de transformation $H_{ik}$ correspondante et de la covariance $\dot{P}_{ik}(t)$ correspondante selon l'équation suivante :

$$ kg_{ik}(t) = \dot{P}_{ik}(t) \cdot H_{ik}^T / \left( H_{ik} \dot{P}_{ik}(t) H_{ik}^T + R \right) $$, $kg_{ik}(t)$ représentant un gain de Kalman correspondant du k-ième ensemble de résultats de mesure effectifs provenant du i-ème capteur concernant l'état de mouvement de la cible à l'instant t, $\dot{P}_{ik}(t)$ représentant une covariance correspondante du k-ième ensemble de résultats de mesure effectifs provenant du i-ème capteur concernant l'état de mouvement de la cible à l'instant t, $H_{ik}$ représentant une matrice de transformation correspondante du k-ième ensemble de résultats de mesure effectifs provenant du i-ème capteur, $H_{ik}^T$ représentant une matrice transposée de la matrice de transformation correspondante du k-ième ensemble de résultats de mesure effectifs provenant du i-ème capteur, et $R$ représentant la covariance d'un bruit du processus de mesure ; et

une unité 3D destinée à calculer, pour chaque ensemble de résultats de mesure effectifs $Z_{ik}(t)$, le résultat d'estimation optimal $X_{ik}(t)$ correspondant pour le capteur correspondant concernant l'état de mouvement de la cible à l'instant présent t sur la base du résultat de prédiction de fusion $\dot{X}(t)$, du gain de Kalman $kg_{ik}(t)$ correspondant, de l'ensemble de résultats de mesure effectifs $Z_{ik}(t)$, et de la matrice de transformation $H_{ik}$ correspondante selon l'équation suivante :

$$ X_{ik}(t) = \dot{X}(t) + kg_{ik}(t) \left( Z_{ik}(t) - H_{ik}\dot{X}(t) \right) $$

et l'unité 4 comprenant :

une unité 4A destinée à déterminer le poids $w_{ik}(t)$ correspondant de chacun des résultats d'estimation optimaux selon la covariance $\dot{P}_{ik}(t)$ correspondante de chaque ensemble de résultats de mesure effectifs.

**6.** Appareil d'optimisation selon la revendication 5, comprenant en outre :

une unité 5 destinée à corriger la covariance $\dot{P}_{ik}(t)$ obtenue dans l'unité 3B selon la matrice de transformation $H_{ik}$ obtenue dans l'unité 3A et le gain de Kalman $kg_{ik}(t)$ obtenu dans l'unité 3C, de manière à obtenir une covariance corrigée $P_{ik}(t)$.

**7.** Appareil d'optimisation selon la revendication 6, dans lequel, dans l'unité 3B, la covariance $\dot{P}_{ik}(t)$ correspondante de chaque ensemble de résultats de mesure effectifs à l'instant présent t est obtenue avec une covariance corrigée obtenue à un instant précédent t-1, $P_{ik}(t - 1)$.

**8.** Appareil d'optimisation selon l'une quelconque des revendications 5 à 7, dans lequel, dans l'unité 1, le résultat de prédiction de fusion $\dot{X}(t)$ à l'instant présent t est obtenu avec un résultat d'estimation de fusion optimal concernant l'état de mouvement de la cible à l'instant précédent t-1, $X(t-1)$.

**9.** Support d'enregistrement sur lequel est stocké un programme d'ordinateur, le programme étant exécuté par un ordinateur pour mettre en œuvre les étapes du procédé selon l'une quelconque des revendications 1 à 4.

*Fig. 1*

Calculating a transformation matrix — S31

Calculating a covariance — S32

Calculating a Kalman gain — S33

Calculating an optimal estimation result — S34

**S3**

*Fig. 2*

Determining a corresponding weight of an optimal estimation result — S41

Obtaining an optimal fusion estimation result for all sensors — S42

**S4**

*Fig. 3*

Fig. 4

Fig. 5